(19) Europäisches Patentamt / European Patent Office / Office européen des brevets

(11) **EP 4 672 094 A1**

(12) **EUROPEAN PATENT APPLICATION**

(43) Date of publication:
**31.12.2025   Bulletin 2026/01**

(51) International Patent Classification (IPC):
**G06N 5/01** *(2023.01)*          **G06N 5/045** *(2023.01)*

(21) Application number: **25185800.7**

(52) Cooperative Patent Classification (CPC):
**G06N 5/01; G06N 5/045**

(22) Date of filing: **27.06.2025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.06.2024   US 202418758454**

(71) Applicant: **AspenTech Corporation**
**Bedford, MA 01730 (US)**

(72) Inventor: **Serneels, Sven**
**Cheyenne, 82009 (US)**

(74) Representative: **Bandpay & Greuter**
**11, rue Christophe Colomb**
**75008 Paris (FR)**

(54) **METHODS AND SYSTEMS FOR GENERATING INTERPRETABLE AND DIFFERENTIABLE MODELS FOR INDUSTRIAL OPTIMIZATION**

(57) Embodiments create models configured to predict behavior of real-world systems. An example embodiment receives input and output data for a real-world system and, next, subdivides the input and output data received into a plurality of subsets in accordance with a criterion. For each subset of the plurality, a regression model is fit to data of the subset. For each data point in each subset of the plurality of subsets, a respective weight is assigned to the data point for each regression model. In turn, the model configured to predict the behavior of the real-world system is generated by calculating a weighted average of each regression model using the assigned respective weights.

FIG. 1

**Description**

BACKGROUND

Machine learning (ML) and artificial intelligence (AI) applications have recently enjoyed a major boost in popularity in businesses and academic applications alike. This jump in adoption followed on the heels of major widely publicized success stories. In 2015, DeepMind's AlphaGo became the first artificial intelligence agent to outplay human contenders at the board game "Go," which motivated commercial interests to explore if similar successes could be established in their respective domains. More recently, OpenAI's ChatGPT thrust conversational AI into previously unattainable levels of user friendliness and accuracy, thereby spurring major adoption of conversational applications into domains of all sorts.

SUMMARY

Owing to the aforementioned developments, machine learning has found its way into many sectors of the economy. That said, machine learning is still only at the tip of the iceberg in terms of what it is capable of, and there are extant white-spaces in the portfolio of available machine learning methods. Different domains or industries may have specific requirements to be met, which may not all be accomplishable with off-the-shelf ML tools.

One example of such a domain area are the manufacturing and process industries. These industries present challenges different from the challenges solved by existing systems, such as AlphaGo. At first, many manufacturing processes may rely on very noisy data generation processes, which may apply to both dependent and independent variables. Therefore, while predictions of certain targets in the manufacturing process may be a necessity, those same predictions will be prone to error margins that have to be accounted for. It is inevitable that ML models based on such data will occasionally make predictions that are incorrect. As opposed to AlphaGo or ChatGPT, if an industrial ML model makes inaccurate predictions, actions based on such predictions may have undesirable real-world consequences. For example, a safety incident, an environmental spill, or production of out-of-spec material are all much more serious than loss of a game of "Go." For these reasons, in the manufacturing industries it is imperative that the models deployed be interpretable up to some extent.

Beyond interpretability, in industrial deployment, machine learning models may be a building block in a larger scale optimization. That optimization could involve operations for an entire production unit, but also aspects like production planning, scheduling, or even supply chain optimization. In such cases, it is often either a requirement, or at least more convenient, to have access to gradients of the machine learning model, be it locally or globally. To have models that satisfy differentiability (i.e., access to gradients) and interpretability constraints is often seen as a trade-off with predictive performance. For instance, models that can be trained to high standards of accuracy, such as, for example, XGBoost or deep learning models, can only be interpreted indirectly through techniques such as variable importance or Shapley values. Deep learning models can be globally continuously differentiable, depending on the architecture, but XGBoost is not. On the other hand, statistical regression models are straightforward to interpret and globally differentiable, but they may not attain the same level of accuracy.

Several proposals have been made in the industry to improve upon the existing state-of-the-art machine learning models, either from a differentiability or interpretability point of view, but rarely, if ever, both. In contrast to existing methods, embodiments generate models that are both differentiable and interpretable. Some embodiments disclosed herein focus on differentiability and interpretability within the broader class of tree-based models. Until a few years ago, the subset of tree-based models that led to the highest accuracy were all ensemble models, e.g., random forests, boosted trees, or bagged trees. Individual decision trees are highly interpretable, but that interpretability vanishes when the trees are combined into an ensemble and the resulting predictions become linear combinations of predictions from individual trees.

To mitigate these drawbacks, an embodiment introduces a new tree-based class of methods that combines the advantages of being highly interpretable and either locally or globally differentiable. For being both interpretable and differentiable, the new class of methods is referred to herein as "Indi Learning." An embodiment encompasses both an Indi regressor and an Indi classifier. The novel Indi learning methods introduced herein may be widely customizable. Depending on the settings, embodiments can generate models that are either globally or locally continuously differentiable, and they can be based on different kinds of regression models, some of which offer higher degrees of interpretability and/or variable selection than others. Which option to choose can depend on the application: when applied to advanced process control, for instance, it will be very important to have a globally continuously differentiable model, whereas if the model is built to create a soft sensor, local differentiability may suffice, but more involved interpretation by the operators may be expected.

Embodiments of the present invention provide improved methods and systems for generating models to predict behavior of real-world systems.

One such embodiment is directed to a computer-implemented method of creating a model configured to predict behavior of a real-world system. The method includes, by a processor, receiving, in memory, input and output data for the real-world system. Next, the input and output data received is subdivided into a plurality of subsets in accordance with a criterion. To continue, for each subset of the plurality, a regression model is fit to data of the subset and, for each data point in each subset of the plurality of subsets, a respective weight is assigned to the data point for each regression model. In turn, the model configured to predict the behavior of the real-world system is generated by calculating a weighted average of each regression model using the assigned respective weights.

According to an embodiment, subdividing the input and output data into a plurality of subsets comprises iteratively subdividing the input and output data to form a tree, wherein each subset of the plurality of subsets is a leaf of the tree. In an embodiment, the tree is an oblique decision tree. Such an embodiment may further include evaluating compliance of the plurality of subsets with a quality metric and, responsive to the evaluating determining at least one subset does not comply with the quality metric, creating at least one new subset by combining two or more subsets of the plurality of subsets. Further, according to an embodiment, the fitting, the assigning, and the generating may be performed with the created at least one new subset and data of the at least one new subset.

In an embodiment, wherein the criterion is a mean-squared error. Further, according to an embodiment, each weight is assigned based on a weighting scheme inherited from loess regression. In another embodiment, a given regression model is a cross-validated linear regression model.

An example embodiment further comprises receiving an indication of one or more constraints and modifying the generated model to predict the behavior of the real-world system in accordance with the one or more constraints received. Yet another example embodiment further comprises receiving an indication of a hyper-parameter. In such an embodiment, in generating the model, the model is generated in accordance with the hyper-parameter.

Embodiments may utilize the model for a variety of real-world applications. For instance, an embodiment deploys the model to control operation of the real-world system. In such an embodiment, deploying the model to control operation of the real-world system comprises (i) receiving, in the memory, an indication of a parameter of the real-world system, (ii) predicting real-time behavior of the real-world system by processing the received indication of the parameter using the model, and (iii) controlling operation of the real-world system based on the predicted real-time behavior.

Another embodiment integrates the model in a control loop. In such an embodiment, the control loop (i) processes candidate operating characteristics of the real-world system using the model to determine predicted behavior change in the real-world system and (ii) responsively sets one or more operating characteristics in the real-world system based on the predicted behavior change.

Yet another embodiment, deploys the model as a surrogate model to determine optimized operations of the real-world system. In such an embodiment, deploying the model as a surrogate model to determine optimized operations of the real-world system may include iteratively testing candidate operations of the real-world system using the surrogate model until a behavior predicted by the model for given candidate operations meets one or more criteria.

An example embodiment further includes deploying the model as a block in a process simulation.

Yet another example embodiment receives, in the memory, an indication of a parameter of the real-world system. Such an embodiment processes the received indication of the parameter of the real-world system using the model to estimate a property of the real-world system. According to an embodiment, the estimated property is at least one of: quality of a product produced by the real-world system, composition of effluent produced by the real-world system, composition of by-product produced by the real-world system, yield of a product produced by the real-world system, yield of a by-product produced by the real-world system, operational health of the real-world system, and energy consumption of the real-world system.

In embodiments, the real-world may be any real-world system known to those of skill in the art. For instance, the real-world system may include at least one of a manufacturing system, a chemical system, a modeling system, an engineering system, a logistical system, a power system, or any combination thereof.

Another embodiment is directed to a system for creating a model configured to predict behavior of a real-world system. The system includes a processor and a memory with computer code instructions stored thereon. The processor and the memory, with the computer code instructions, are configured to cause the system to implement any embodiments or combination of embodiments described herein.

Yet another embodiment is directed to a computer program product for creating a model configured to predict behavior of a real-world system. The computer program product comprises a computer readable medium with computer code instructions stored thereon where, the computer code instructions, when executed by a processor, cause an apparatus associated with the processor to perform any embodiments or combination of embodiments described herein.

It is noted that embodiments of the method, system, and computer program product may be configured to implement any embodiments, or combination of embodiments, described herein.

BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating embodiments.

FIG. 1 is a flowchart of a method of creating a model configured to predict behavior of a real-world system, according to an embodiment.

FIG. 2 is a scatter plot with example input and output data for an example real-world system that may be utilized by embodiments.

FIG. 3 is a schematic representation of a method for constructing a decision tree using machine learning, according to an embodiment.

FIG. 4 is a flow chart illustrating a method for selecting a local regression model according to an embodiment.

FIG. 5 is a flow diagram illustrating a method of constructing a model according to an embodiment.

FIG. 6 is a workflow diagram illustrating a method embodiment for deploying a model as a soft sensor.

FIG. 7 is a schematic representation illustrating a method for incorporating a model, generated by an embodiment, into an advanced process control loop.

FIG. 8 is a flow diagram illustrating a method using a model, according to an embodiment, for simulation or supply chain optimization.

FIG. 9 is a plot of local regression coefficients according to an embodiment.

FIG. 10 is a scatter plot of local latent variables in an embodiment.

FIG. 11 depicts a computer network or similar digital processing environment in which embodiments of the present disclosure may be implemented.

FIG. 12 is a diagram of an example internal structure of a computer in the computer system of FIG. 11, according to an embodiment.

DETAILED DESCRIPTION

A description of example embodiments follows.

As described hereinabove, until recently, the most performant type of tree-based models were ensemble models, which can either be direct ensemble prediction averages, or bagged or boosted ensembles. These methods still enjoy widespread adoption, most frequently in the form of random forests (Breiman, 2001) or (extreme) gradient boosted regression trees (Friedman, 2001), a popular implementation of which is referred to as XGBoost. However, owing to the tree character of the unit models in the ensembles, the ensemble models are discontinuous and not globally differentiable. Also, due to the ensemble used for prediction, ensemble models lose the power for interpretation that the unit trees in the ensemble would offer. Motivated by this lack of interpretability, globally optimal trees have been proposed in recent years.

One of the most widely adopted methods used to calculate decision trees is a greedy heuristics-based algorithm called Classification and Regression Tree (CART). One advantage ensemble methods (such as Random Forest) have over individual CART trees is that the ensemble mitigates the effects of randomness in the greedy search. However, with today's computational power, it has become possible to calculate decision trees deterministically, which removes the necessity for ensembles.

Globally optimal decision trees were first introduced by Bertsimas and Dunn (2017). Meanwhile, development of globally optimal trees has been extended to sparse decision trees (Hu et al., 2019), regression trees (Bertsimas et al., 2021) and sparse optimal regression trees (Zhang et al., 2023), among other extensions. Notably, such sparse optimal regression trees can allow for multivariate splits (oblique trees) and can also have multiple linear regression models in the leaves of the tree. Such oblique regression trees have the advantage that a shallow tree can be as performant as a deep classical random forest and are therefore easier to interpret. Although, the latter models are still not continuously differentiable.

The discontinuous nature of decision trees has long been seen as a disadvantage, owing to which recently locally smoothed versions have been introduced. Local linear forests (Friedberg et al., 2020) use a random forest as a weighting kernel for locally weighted linear regressions, which delivers a smooth and continuously differentiable model. However, from an interpretation perspective, these models are still random forests, and it is difficult to grasp how the local weights are calculated. Also, local linear forests require a weighted regression model to be calculated at each data point, which may be computationally prohibitive in a big data setting.

Embodiments solve the foregoing problems and generate models that are both interpretable and differentiable, i.e., "Indi." Embodiments present "Indi learning" which is a novel family of machine learning models that can attain accuracy similar to well established techniques, such as random forests or gradient boosted forests, while offering superior interpretability and, optionally, a resulting model that is globally continuously differentiable. Models generated using embodiments may be utilized in a variety of different applications, and adoption can be expected in industries as diverse as agriculture, finance, aerospace, defense, manufacturing, modeling, engineering, logistics, power, and pharmaceuticals, amongst others. Further, it is noted that the energy, manufacturing, and engineering sectors may turn out to be particularly well positioned to benefit from the advantages of embodiments and may become early adopters.

Embodiments perform on par with state-of-the-art machine learning methods in terms of model metrics yet offer superior options for interpretation and can be either locally or globally differentiable. Models according to embodiments, i.e., "Indi models," may be used for both classification and regression purposes, as well as be adapted to respect first principles constraints such as conservation laws. While each of these properties can be attractive to a wide variety of industries, the energy, manufacturing, chemical, modeling, logistics, and engineering industries may particularly benefit from embodiments disclosed herein. Potential applications for embodiments may be deployment of Indi models as a soft sensor, embedding Indi models into advanced process control, and deployment of Indi models into process simulations or supply chain optimizers.

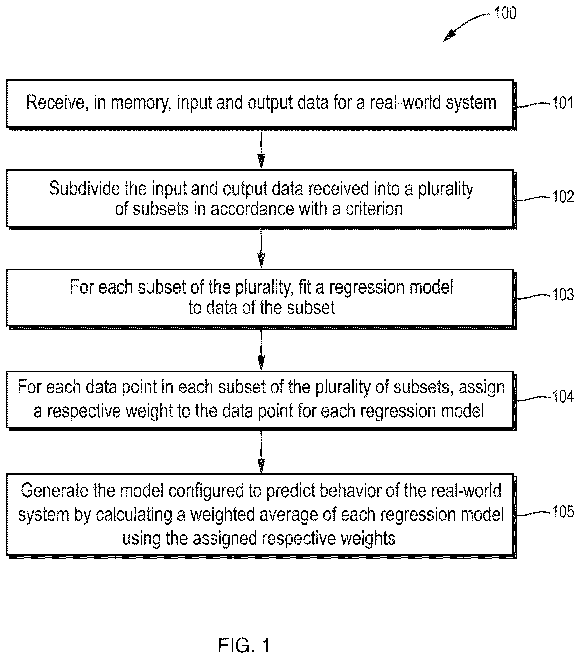

FIG. 1 is a flowchart of a method 100 of creating a model configured to predict behavior of a real-world system, according to an embodiment. The method 100 begins at step 101 by receiving, in memory of a processor (implementing the method), input and output data for the real-world system. At step 102, the received set of input and output data is subdivided into a plurality of subsets, e.g., leaves, in accordance with a criterion. Next, at step 103, a regression model is fit to each subset of the plurality of subsets. In turn, at step 104, for each data point in each subset of the plurality, a respective weight is assigned to the data point for each regression model. Lastly, at step 105, a model configured to predict behavior of the real-world system is generated by calculating a weighted average of each regression model using the assigned respective weights. According to an embodiment, the resulting predictive model (i.e., the model generated at step 105) may be a linear model that applies locally in a relative proximity around a data point for which a prediction is desired. According to an embodiment, step 105 may be implemented using equation 6 described below.

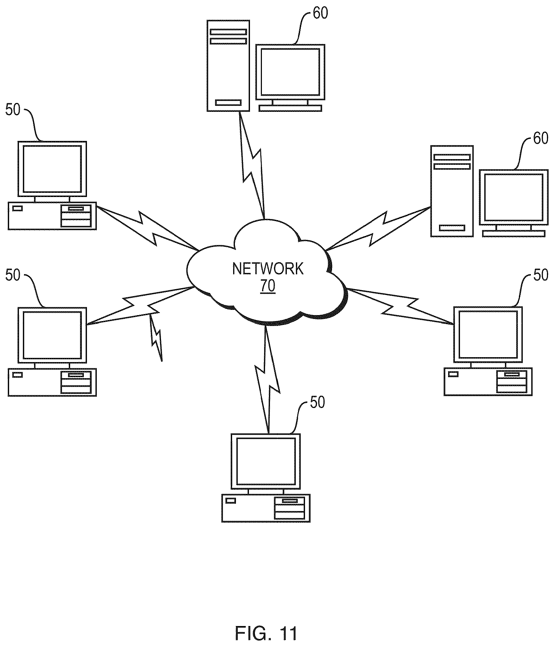

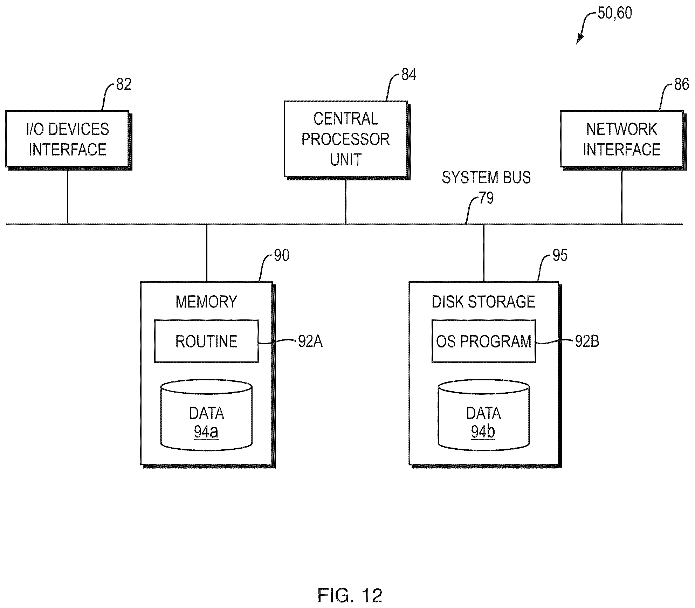

The method 100 is computer-implemented and, as such, the functionality and effective operations, e.g., the receiving (101), subdividing (102), fitting (103), assigning (104) and generating (105), are automatically implemented by one or more digital processors. Moreover, the method 100 can be implemented using any computer device or combination of computing devices known in the art. Among other examples, the method 100 can be implemented using computer(s)/device(s) 50 and/or 60 described hereinbelow in relation to FIGs. 11 and 12.

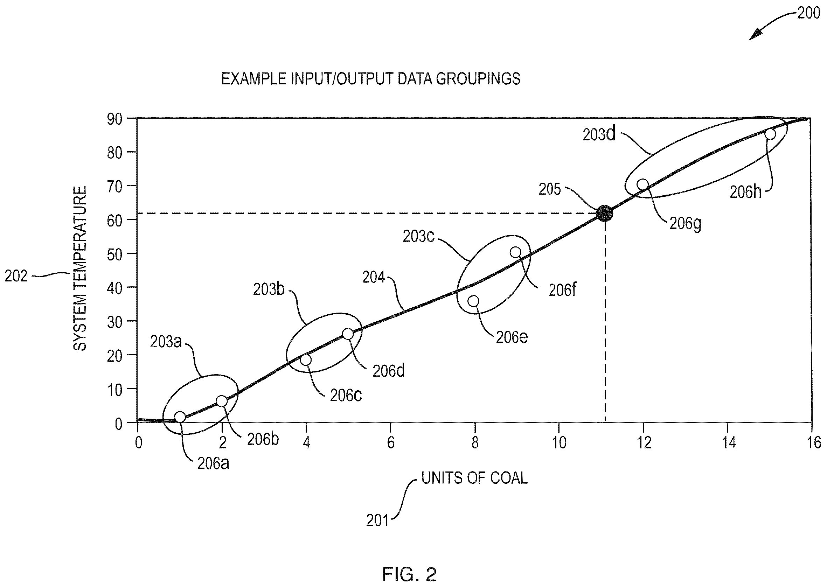

The input and output data received at step 101 may be any input and output data for any system, including, but not limited to, numerical data. In embodiments, the real-world system may be any real-world system known to those of skill in the art. For instance, the real-world system may include at least one of a manufacturing system, a chemical system, a modeling system, an engineering system, a logistical system, a power system, or any combination thereof. To illustrate, in an example embodiment, the input data may be an amount of coal, and the output data may be a corresponding system temperature resulting from the amount of coal input into the system. Example input/output data is described hereinbelow in relation to FIG. 2. Further, it is noted that because the method 100 is computer-implemented, the input/output data may be received at step 101 from any data storage or combination of data storage devices communicatively coupled or capable of being communicatively coupled, to a computing device implementing the method 100.

As noted above, at step 102, the received input/output data is subdivided in accordance with a criterion. In embodiments, the criterion may be any criterion known to those of skill in the art. For example, in an embodiment, the criterion is a mean-squared error. Further, according to an embodiment, the criterion may be the MSECV-HHCART algorithm discussed herein in relation to Equation (2). The MSECV-HHCART algorithm minimizes the mean squared error of cross-validation and makes the eventual fit less prone to random effects.

In an embodiment, subdividing the input and output data into a plurality of subsets at step 102 includes iteratively subdividing the received input and output data to form a tree, wherein each subset of the plurality of subsets is a leaf of the term. According to an embodiment of the method 100, the tree may be an oblique decision tree. Embodiments of the method 100 may evaluate the subdividing performed at step 102 and create new subsets based on results of the evaluation. One such embodiment evaluates compliance of the subsets with a quality metric and, responsive to the evaluation determining at least one subset of the plurality does not comply with the quality metric, creating at least one new subset by combining two or more subsets of the plurality of subsets. In some embodiments, the quality metric may be related to a statistical F-test to assess if there is a statistical difference between the predictions from various configurations of the subsets, e.g., a statistical difference between the predictions from a single leaf model and those from two individual leaf models. It should be understood however that other tests, such as computing the $R^2$ score for each of the various configurations of the subsets and making a subdividing determination based on the $R^2$ score is also possible. For instance, an embodiment may compute the $R^2$ score for both a single model and two models in children leaves and make a determination to prune the children if $R^2$ is not at least a certain percentage higher in the children than in the parent. This combining may include combining (i) a subset that does not comply with quality metric, and (ii) a subset that does comply with the quality metric, to create a new subset. Similarly, in an embodiment, the combining may include combining two subsets that do not meet the quality metric to create a new subset. Further, in an embodiment that creates new subsets, the subsequent steps of the method 100, e.g., the steps 103-105, are performed with the new subsets and remaining subsets from the plurality of subsets.

It is noted that further detail of subdividing functionality that may be performed at step 102 is described hereinbelow in relation to FIG. 2 and under the "Splitting Procedure" heading.

At step 103, a regression model is fit to data of each subset. In embodiments, any regression model(s) known to those of skill in the art may be utilized at step 103. For instance, in an embodiment, a regression model that is utilized may be a cross-validated linear regression model. It is noted that further detail of fitting functionality that may be performed at step 103 is described hereinbelow in relation to FIG. 2 and under the "Local Regression Models" heading.

At step 104, for each data point in each subset, a respective weight is assigned to the data point for each regression model. To illustrate, consider an example with three subsets of data, resulting in three regression models, A, B, and C. For each data point, a weight is assigned for each model, A, B, C. Thus, for an example data point in a subset that is fit with model A, the data point may have weights of 0.5 model A, 0.4 model B, and 0.1 model C. In assigning the weights, the determination of each assigned weight may be based on a weighting scheme inherited from loess regression. It is noted that further detail of weight assigning functionality that may be performed at step 104 is described hereinbelow in relation to FIG. 2 and under the "Local Weighting" heading.

An example embodiment of the method 100 further comprises receiving an indication of one or more constraints and modifying the generated model to predict the behavior of the real-world system in accordance with the one or more constraints received. According to an embodiment, example constraints include linear or non-linear equality or inequality constraints. Further details and examples regarding functionality of applying constraints that may be used in the method 100 can be found hereinbelow under the heading "Adherence To Constraints."

Yet another example embodiment of the method 100 further comprises receiving an indication of a hyper-parameter. In such an embodiment, in generating the model at step 105, the model is generated in accordance with the hyper-parameter. According to an embodiment, example hyperparameters include maximum depth of the tree (how many levels prior to pruning), minimum number of samples in each leaf, choice of the local linear model (which may have its own set of hyper-parameters), and the local weighting power ($\overline{\omega}$ described below). Further details regarding functionality of utilizing hyper-parameters that may be employed in the method 100 can be found hereinbelow under the heading "Hyper-Parameter Selection."

Embodiments of the method 100 may utilize the model generated at step 105 for a variety of real-world applications. For instance, an embodiment of the method 100 deploys the model to control operation of the real-world system. In an embodiment, deploying the model to control operation of the real-world system comprises (i) receiving, in the memory, an indication of a parameter of the real-world system, (ii) predicting real-time behavior of the real-world system by processing the received indication of the parameter using the model, and (iii) controlling operation of the real-world system based on the predicted real-time behavior.

Another embodiment of the method 100 integrates the model in a control loop. In such an embodiment, the control loop (i) processes candidate operating characteristics of the real-world system using the model to determine predicted behavior change in the real-world system and (ii) responsively sets one or more operating characteristics in the real-world system based on the predicted behavior change.

Yet another embodiment, deploys the model as a surrogate model to determine optimized operations of the real-world system. In such an embodiment, deploying the model as a surrogate model to determine optimized operations of the real-world system may include iteratively testing candidate operations of the real-world system using the surrogate model until a behavior predicted by the model for given candidate operations meets one or more criteria. In turn, candidate operations that yielded predicted behavior meeting the one or more criteria may then be employed in the real-world, e.g., automatically.

An example embodiment further includes deploying the model as a block in a process simulation.

Yet another example embodiment receives, in the memory, an indication of a parameter of the real-world system. Such an embodiment processes the received indication of the parameter of the real-world system using the model to estimate a property of the real-world system. According to an embodiment, the estimated property, amongst other examples, is at least one of: quality of a product produced by the real-world system, composition of effluent produced by the real-world system, composition of by-product produced by the real-world system, yield of a product produced by the real-world system, yield of a by-product produced by the real-world system, operational health of the real-world system, and energy consumption of the real-world system.

Further examples and details of real-world applications of embodiments, e.g., the method 100, can be found hereinbelow under the heading "Example Real-World Applications."

FIG. 2 is a scatter plot 200 of example input (units of coal 201) and output data (system temperature 202) for an example real-world system. The plot 200 illustrates example functionality that may be implemented in embodiments. As initial matter, the data points 206a-h are points representing units of coal 201 and resulting system temperature 202 that may be input data processed by embodiments. In accordance with embodiments disclosed herein, like subsets of data are identified, e.g., at step 102, to create the subsets 203a-d. To illustrate, in this example, the input data indicates that eight units of coal as an input value corresponds to thirty-five degrees of temperature as an output value (point 206e), and nine units of coal as an input value corresponds to fifty degrees of temperature as an output value (point 206f). Therefore, points 206e and 206f are grouped together into subset 203c as the points 206e-f are similar, i.e., they are in relative proximity within the graph 200 of input 201 and output 202 data.

To continue this illustrative example, after creating the subsets 203a-d, an embodiment continues, e.g., at step 103, to fit a regression model to the data of each subset 203a-d. In this example, a regression model (not shown but referred to as A) is fit to points 206a-b, a regression model (not shown but referred to as B) is fit to points 206c-d, a regression model (not shown but referred to as C) is fit to points 206e-f, and a regression model (not shown but referred to as D) is fit to points 206g-h. After fitting the regression models, the illustrative example continues, e.g., at step 104, and for each data point in each subset of the plurality of subsets, (203a-d) a respective weight is assigned to the data point for each regression model. To illustrate, consider the data point 206e. A respective weight for each regression model, for the data point 206e is assigned, e.g., 206e is associated with 0.1 regression A, 0.2 regression B, 0.6 regression C, and 0.1 regression D. This weight assigning is performed for each data point 206a-h and, then, e.g., at step 105, the model (e.g., shown by line 204) configured to predict behavior of the real-world system is generated by calculating a weighted average of each regression model (A-D) using the assigned respective weights.

The model 204 is able to predict an expected output data value 202 based on an input data value 201, even if that value is not a data point used to generate the model 204. For example, if a user wants to predict system temperature 202 for 11 units of coal 201, the resulting system temperature is predicted by the model 204 to be about sixty-one degrees (shown by the point 205).

Splitting Procedure

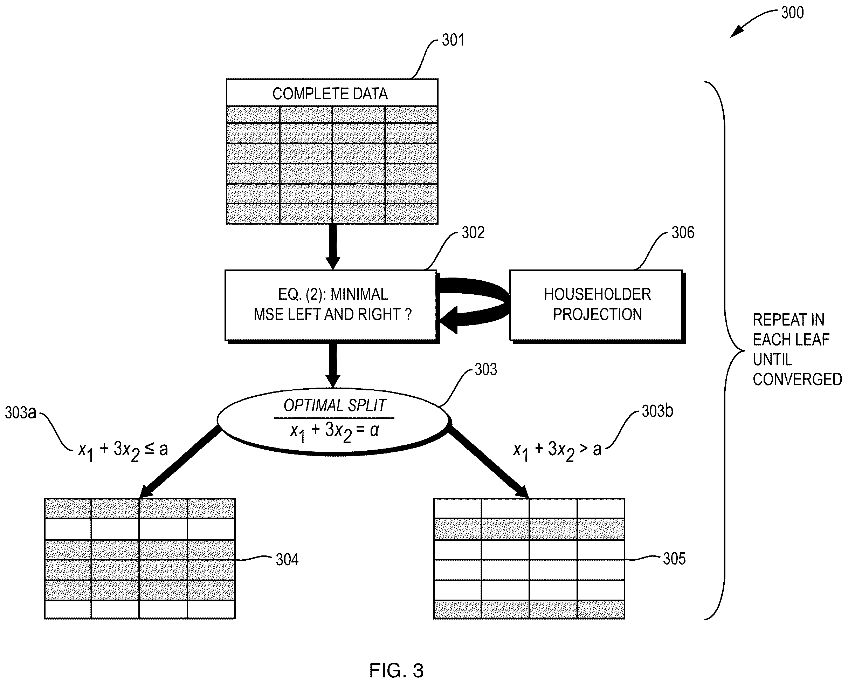

FIG. 3 is a schematic representation of a method 300 for constructing a decision tree using machine learning according to an embodiment. It is noted that the method 300 may be utilized at step 102 of the method 100 to determine subsets of data. The method 300 begins by receiving 301 a set of input and output data for a real-world system. To continue data received at step 301 is split based on a minimal mean squared error calculation 302 (discussed below at least in relation to Equation (2)). The Householder projection 306 may be used in an iterative search to identify split criterion that minimizes mean squared error on both sides of the split. Further, in a classification context, the Householder projection 306 may identify the number of correct labels on both sides of the split. In turn, an optimal split 303 for the data is determined from the mean squared error calculation 302. Specifically, a cross-validated linear regression model 303a-b is fit on each side of the split, and the split is chosen such that the mean-squared prediction error (Equation (2)) on each side of the split 303 is minimal. In the example of FIG. 3, the linear regression model is $x_1 + 3x_2 = a$ and, thus, for data sets where $x_1 + 3x_2 \leq a$ (303a), the data is split into one leaf 304 and for data sets where $x_1 + 3x_2 > a$ (303b), the data is split into a separate leaf 305. This process of splitting the data is repeated within each leaf until the method 300 converges.

Embodiments offer the best of both worlds by generating a highly interpretable model based on a single oblique decision tree, while also being continuously differentiable, either on a global or on a local scale. A regressor, according to an embodiment, is constructed as follows: first, a tree component is estimated as a regression tree, for example an oblique regression tree, that cross-validates regression models both in the construction of splits and locally in the leaves. An adaptation of the Householder CART (or HHCART) algorithm (Wickramarachchi et al., 2016) is taken, in an embodiment, to estimate the oblique tree. A novelty introduced here concerns a regression modification of the HHCART algorithm. The original algorithm was designed for decision trees and thus, mainly for classification purposes. Let $\{\mathbf{X}_i\}_{i=1}^{n}$ be a sample of $n$ data points in a $p$ variate sample space and let there be a categorical dependent variable $\{\ell_i\}_{i=1}^{n}$. These sets can also be denoted in matrix vector notation, such that $\mathbf{X} \in \mathbb{R}^{n \times p}$ and each $\mathbf{x}_i$ is a row of $\mathbf{X}$. To continue, the original HHCART algorithm would identify oblique splits of affine shape $\mathbf{W}^T\mathbf{X} + \mathbf{b}$, where the HHCART algorithm estimates the values of $\mathbf{W}$ and $\mathbf{b}$ as those subsets of cases that maximize the amount of identically labeled cases on each side of the split. Let $\mathcal{L}$ denote a subset of $L$ cases in the left-hand side of the split and $\mathcal{R}$ the corresponding subset of $R$ cases in the right hand side of the split, where $L + R = n$ at depth 1. Then, HHCART identifies $\mathcal{L}$ and $\mathcal{R}$ such that:

$$\mathcal{L}, \mathcal{R} = \underset{\mathcal{A},\mathcal{B}}{\operatorname{argmax}} \sum_{\mathcal{A}} \mathbb{I}(\ell_i = \tilde{\ell}_{\mathcal{A}}) + \sum_{\mathcal{B}} \mathbb{I}(\ell_i = \tilde{\ell}_{\mathcal{B}}), \qquad (1)$$

where, in Equation (1) above, $\tilde{\ell}$ denotes the most frequently occurring label in the respective set of labels and $\mathbb{I}$ is the indicator function.

In contrast, embodiments generalize the HHCART approach to the regression setting as follows: instead of maximizing the number of correctly labeled cases, a cross-validated linear regression model is fit on each side of the split and the split is chosen such that the mean-squared prediction error on each side is minimal:

$$\mathcal{L}, \mathcal{R} = \underset{A,B}{\operatorname{arg\,min}} \sum_{A \cup B} (y_i - \hat{y}_i)^2 / (n_A + n_B), \tag{2}$$

where, in Equation (2) (mean-squared prediction error equation) above, $\hat{y}_i$ is the prediction for case response $y_i$ from the corresponding cross-validated local regression model. The internal cross-validations at the time of the splitting procedure make the eventual fit less prone to random effects. This also reduces or eliminates the need to fit multiple trees. This regression setup of HHCART is referred to herein as Mean Squared Error Cross Validation HHCART (MSECV-HHCART), as it minimizes the mean squared error of cross-validation. Note that MSECV-HHCART uses the original HHCART algorithm to construct the tree as published in Wickramarachchi et al. (2016) in its entirety, except for the adoption of the regression split criterion (Equation (2)) instead of the original tree, that was designed for classification tasks.

According to an embodiment, standard convergence practices for CART models are applied to continue splitting the data as the tree grows. Compared to CART regression trees, in an embodiment, a higher minimal number of cases per leaf is recommended to guarantee statistical significance in the cross-validations. How many cases per leaf exactly will depend on the use case, but an embodiment does not build trees with fewer than ten cases in each leaf. This may be a limiting factor in traditional statistical settings, such as experimental designs and randomized control trials. However, in the process industries, there is no lack of data and typical applications of data analytics as soft sensors or as analytics embedded into advanced process control loops are based on at least thousands of data points, sometimes millions.

The MSECV-HHCART algorithm is itself a heuristic optimizer. In that sense, the approach differs from, e.g., (Bertsimas et al., 2021) which attempts to numerically optimize the regression tree formulation. However, it is known that identification of the optimal binary decision tree is a nondeterministic polynomial complete (NP-complete) problem (Hyafil and Rivest, 1976). Therefore, in practice it may still be an academic exercise to calculate regression trees to numerical optimality. Even using state-of-the-art optimizers, such as CPLEX and GUROBI, computation times because less tractable even for moderately sized data and/or moderately deep trees. Therefore, a practicable solution for real-world data may be to rely on heuristics. Dunn (2018) resorts to "local search", a heuristic algorithm commonly used in supply chain optimization. However, the HHCART algorithm has the advantages that one can intuitively understand how the splits are created, and the HHCART algorithm makes the splits deterministically. In contrast to the original CART, HHCART is not greedy, nor does it involve any randomness, such that it will produce the same tree each time it is estimated on the same data set.

Local Regression Models

Cross-validated regression models have historically been used to generate splits while constructing regression trees. Once a tree is established, the models at the terminal nodes can constitute the leaves. One could hypothetically also fit a different type of model in the leaves, but it is more methodologically consistent to use the same type of models throughout the tree. In terms of which model qualifies, any kind of regression model can be plugged in. Of course, the eventual tree will inherit interpretability, along with some other properties, from the regression model plugged in. For instance, when a latent variable based regression model is used to build the tree, e.g., as partial least squares (PLS), latent variable estimates, such as weighting vectors, scores, and loadings can be estimated and interpreted in every leaf. In a high dimensional context, more parsimonious local models can be obtained by plugging in a sparse regression model that intrinsically performs variable selection. In some cases, one may expect some outliers to be present in the data, in which case the preferred option would be to have robust regression models in the leaves, such that they better represent the bulk of the data in their respective subspaces as opposed to being distorted by outliers.

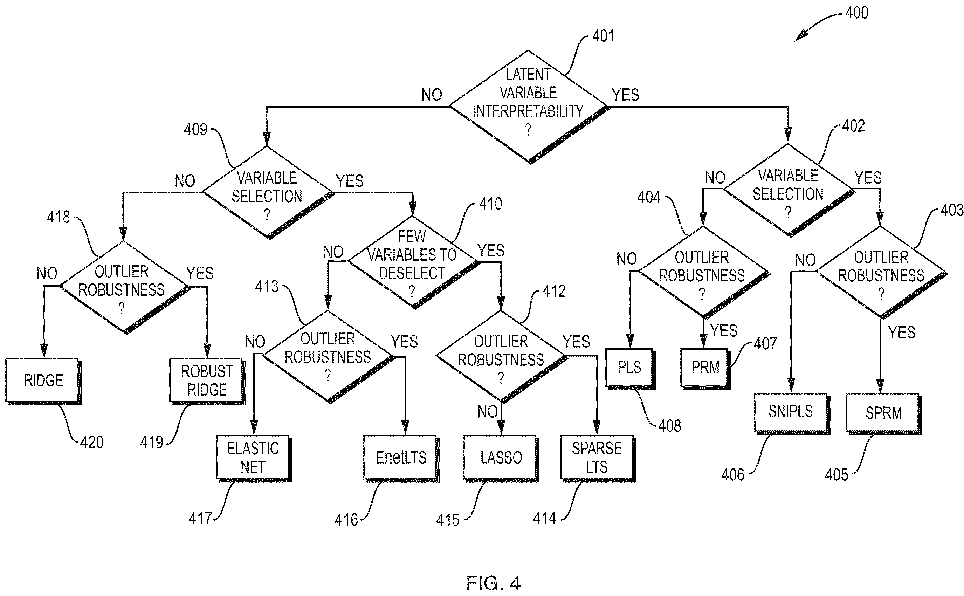

Many options exist for local regression models, FIG. 4 presents a flowchart of a method 400 to select local model regression models. An overview of the models shown in FIG. 4 and the corresponding seminal literature references, is presented in Table 1 below. The local regression models selected using the method 400 may be plugged into a regressor, according to an embodiment. The method 400 may be employed by embodiments, e.g., at step 103 of the method 100, to select and fit regression models.

Starting at step 401, the user determines if latent variable interpretability is required. If, responsive to step 401, the answer is determined to be "Yes," i.e., latent variable interpretability is required, the method 400 moves to step 402 where a decision is performed on whether variable selection is required. If variable selection is required (yes at step 402), the method 400 moves to step 403 and evaluates if outlier robustness is required. If step 403 determines that outlier robustness is required, the method 400 may select Sparse Partial Robust M (SPRM) (405) as its local regression model. If, however, step 403 determines that outlier robustness is not required, the method may select Sparse Nonlinear Iterative Partial Least Squares (SNIPLS) (406) as its local regression model. Returning to step 402, if variable selection is not required (no at step 402), the method 400 moves to step 404 to determine if outlier robustness is required. If step 404 determines that outlier robustness is required, the method 400 may select Partial Robust M (PRM) (407) as its local regression model. If, however, step 404 determines that outlier robustness is not required, the method 400 may select Partial Least Squares (PLS) (408) as its local regression model.

Returning to step 401, if, at step 401 the answer is determined to be "No," i.e., latent variable interpretability is not required, the method 400 moves to step 409 where a decision is performed as to whether variable selection is required. If step 409 determines that variable selection is required, the method 400 moves to step 410 to determine if there are few variables to deselect. Responsive to there being few variables to deselect, i.e., the answer at step 410 is "Yes," the method 400 moves to step 412 to determine if outlier robustness is required. If, at step 412, it is determined that outlier robustness is required, the method 400 may select Sparse Least Trimmed Squares (SparseLTS) (414) as its local regression model. However, if at step 412 it is determined that outlier robustness is not required, the method 400 may select Least Absolute Shrinkage and Selection Operator (LASSO) (415) as its local regression model. Returning to step 410, responsive to there not being few variables to detect, i.e., the answer at step 410 is "No," the method 400 moves to step 413 to determine if outlier robustness is required. If, at step 413 it is determined that outlier robustness is required, the method 400 may select ElasticNet Least Trimmed Squares (EnetLTS) (416) as its local regression model. However, if at step 413 it is determined that outlier robustness is not required, the method 400 may select ElasticNet (417) as its local regression model.

Returning to step 409, if, at step 409, it is determined that variable selection is not required, i.e., the answer at step 409 is "No," the method 400 moves to step 418 to determine if outlier robustness is required. If it is determined at step 418 that outlier robustness is required, the method 400 may select RobustRidge (419) as its local regression model. If, however, it is determined at step 418 that outlier robustness is not required, the method 400 may select Ridge (420) as its local regression model.

Table 1: Overview of linear regression models and their corresponding seminal references

| Method Class | | Classical | Robust |
|---|---|---|---|
| Dense | $L_2$ Penalized | Ridge Regression (Hoerl and Kennard, 1970) | Robust Ridge Regression (Holland, 1973) |
| | Latent Variables | Partial Least Squares (Wold, 1966) | PRM (Semeels et al., 2005) |
| Sparse | $L_2$ Penalized Latent Variables | LASSO (Tibshirani, 1996) | Sparse LTS (Alfons et al., 2013) |
| | | Sparse PLS (Chun and Keleş, 2010) | SPRM (Hoffman et all., 2015) |
| | Double Penalized | Elastic Net (Zou and Hastie, 2005) | Enet LTS (Kumaz et al., 2018) |

It is noted that Table 1 is by no means exhaustive, closely related alternatives exist to most of the listed linear regression models. As such, embodiments may utilize any linear regression models known to those of skill in the art. Further, utilizing the listed linear regression models and any alternative linear regression models will in the embodiments described herein will still result in generating an Indi model. For instance, instead of the rather slow original version of sparse PLS (Chun and Keleş, 201, 2010), in the univariate case embodiments could use the more efficient Sparse Nonlinear Iterative PLS or "SNIPLS" method (Hoffmann et al., 2016), the result of which is Indi learning based on sparse PLS.

Further, it is noted that computational efficiency can be an important criterion in selecting the type of local regression model. As a rule of thumb, latent variable based options are typically slower than the normal penalized alternatives. Likewise, robust versions are considerably slower than classical ones. Therefore, if no latent variable interpretation is required, insertion of Ridge regression will result in the fastest Indi regression models, whereas Enet Least Trimmed Squares (LTS) should only be recommended in very special cases that require local robust models that retain a fairly large subset of the original variables.

While method 400 of FIG. 4 and Table 1 are set up to describe plug-in methods for the Indi regressor, further transformations can be set up after the local regression fit. For instance, to build an Indi classifier instead of an Indi regressor, it suffices to (i) take the original HHCART split (Wickramarachchi et al., 2016) and (ii) apply a logistic link function to the fit of the local regression models.

Local Weighting

The models resulting from the procedures described above, i.e., the splitting procedure and local regression models, present some attractive properties. For instance, due to the cross-validated oblique splitting procedure, a single, comparably shallow tree can achieve predictive performance on par with deeper variable-wise regression trees and the local regression models can be interpreted, especially for the latent variable based options. However, the resulting model is only locally differentiable, i.e., in the leaves of the tree. For some applications this may be sufficient, for instance to fit a soft sensor of which the operators will occasionally want to know which process settings close to the actual operating point are optimal. However, many applications exist where globally differentiable models are preferred/required. Examples of these are advanced process control, surrogate models in engineering simulations, or in distributed energy resource management.

To achieve global differentiability embodiments may utilize the weighting schemes described herein. For instance, instead of using the oblique tree as a predictive model, the tree may be used only to estimate the local models. Then, a continuous model may be constructed by weighting the models locally at each point. For each leaf $\Lambda_j$, let $\mu_j$ denote its multivariate arithmetic mean and $\Sigma_j$ its covariance matrix. Then, for each case, a distance measure to this mean can be computed, the most common of which would be the Mahalanobis distance represented by Equation (3) below:

$$d_{ij}^2\left(\mathbf{x}_i, \mu_j\right) = \left(\mathbf{x}_i - \mu_j\right)^T \Sigma_j^{-1} \left(\mathbf{x}_i - \mu_j\right). \tag{3}$$

Cases can now be locally weighted by assigning a weight to each case for each leaf in a weighting scheme reminiscent of a loess regressor (Cleveland and Devlin, 1988). Let

$$\breve{d}_j^2 = \max_i d_{ij}^2.$$

Then, weights $w_{ij}$ are given by:

$$w_{ij} = W\left(d_{ij}^2/\breve{d}_j^2\right), \tag{4}$$

where the weighting function $W$ is given by $W(u) = ((1 - u)^{1/\bar{\omega}})^3$. Here, $\bar{\omega}$ can be tuned and equivalence to Cleveland and Devlin (1988) is obtained at $\bar{\omega} = 1/3$.

The weighting scheme in Equation (4) now produces a weight for each point and each leaf. By consequence, a predicted value may now be obtained for each point at each leaf from the corresponding locally weighted regression model:

$$\hat{\mathbf{y}}_j = \mathbf{X}\left(\mathbf{X}^T\mathbf{W}_j\mathbf{X}\right)^{-1}\mathbf{X}^T\mathbf{W}_j\mathbf{y}, \tag{5}$$

where, in Equation (5) above, $\mathbf{W}_j = \mathrm{diag}(w_{ij})$.

Finally, to obtain a globally differentiable model, it suffices to take a weighted average of the local regression models in the leaves as represented by Equation (6) below:

$$\hat{y}_i = \frac{\sum_j w_{ij}\hat{y}_{ij}}{\sum_j w_{ij}}. \tag{6}$$

The weighting functionality described herein may be utilized in embodiments, e.g., at steps 104 and 105 of the method 100 described hereinabove in relation to FIG. 1.

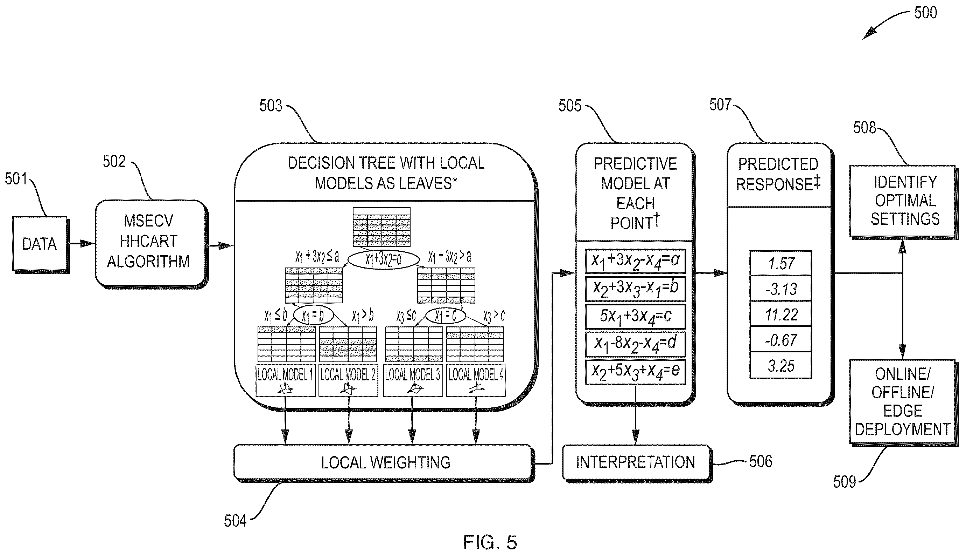

FIG. 5 is a flow diagram of a method 500 for constructing Indi models according to an embodiment. In the method 500, first, a set of input and output data is received 501. The set of input and output data is processed 502 through, according to an embodiment, the MSECV-HHCART algorithm. By implementing the MSECV-HHCART algorithm, a decision tree 503 with local models as its leaves is generated as described above at least in reference to FIG. 3. From there, local weights are assigned 504 to each of the selected local regression models. Selection of the local regression models is described above at least in reference to FIG. 4. Next, a predictive model is established 505 at each data point. Because the methodology used (i.e., MSECV-HHCART) for performing the splitting to create the tree relies on a known equation, the predictive model 505 is able to be interpreted 506 by a user if desired. Based on the predictive model 505, a predicted response for output data for an input data can be generated 507. Predicting an output for a given input is described above at least in relation to FIG. 2. The predictive model 505 and predicted responses 507 can be used to determine 508 optimal settings for the system (modeled by the predictive model 505). The predictive model 505 may be deployed 509 onto an edge device and locally consulted where, from an operator's perspective the model's predictions will look similar to hard measurements from physical sensors.

FIG. 5 described above summarizes how Indi models may be constructed. It is noted that the method 500 may be seen as a way to smooth transitions between models in the leaves of a tree. It is therefore possible for embodiments to utilize different smoothing options, such as splines.

### Adherence To Constraints

In many applications in the physical and engineering sciences, constraints apply that are set by laws of nature, amongst other examples. These can be non-negativity constraints (e.g., for chemical concentrations) or equality constraints imposed by conservation laws such as mass balance, for example. When using a machine learning model to predict behavior for such physical entities, i.e., entities subject to constraints, it can be imperative that the resulting predictions satisfy one or more constraints. For instance, when a machine learning model is built to predict behavior of a distillation tower, e.g., predicting output mass flows from input mass flows and operating conditions, predicted output mass flows should amount to the same total mass as the total mass of the inputs.

A framework to enforce such constraints to linear regression models was described in (Gras Andreu et al., 2022), and was later applied in a deep learning context (Keenan and Zheng, 2023). This framework to enforce constraints can also be applied to embodiments presented herein, resulting in a first-in-class interpretable and differentiable model that also adheres to constraints. In case local differentiability is deemed sufficient, the methods to impose constraints described in (Gras Andreu et al., 2022) can be applied to the local regression models in the leaves. If a globally differentiable model is desired, the constraints may be imposed by applying the methods from (Gras Andreu et al., 2022) to the local predictions from Equation (6).

### Hyper-Parameter Selection

Embodiments present a framework that includes many modeling options. Hence, according to an embodiment, it is important to select the best set of hyper-parameters for the problem at hand. In such an embodiment, the time to deployment is often important. One the one hand, it is possible to set up an exhaustive parameter search, by systematically screening a grid of all options to construct the trees, all options of local models, all options of local weighting, and even options of the hyper-parameters for the local models themselves. Such a grid search can potentially be improved upon by implementing Bayesian parameter optimization. However, these rigorous optimization options are very exhaustive and only recommended if time and computational resources are not a constraint. However, in most situations, domain knowledge and practical considerations can help narrow down the search space, whereupon a less comprehensive search can be performed.

### Example Real World Applications

Embodiments utilize a general machine learning technique that can be applied to any domain that would benefit from having a highly interpretable and differentiable model. As such, applications to sciences as broad as finance, agriculture, climate modelling, and aviation are conceivable. However, as pointed out before, embodiments may be particularly attractive to the engineering, energy, and manufacturing domains. In what follows, a few examples to apply embodiments successfully in these industries are elucidated.

### Soft Sensor

A common application for predictive modeling in industries comprises having a model that makes continuous predictions for an entity that can otherwise only be measured intermittently. For instance, sundry measurements of product quality require samples to be drawn, these samples to be transported to a laboratory, where the samples are then submitted to one or more quality assurance (QA) tests. This procedure may be both costly and take a considerable amount of time. As such, results for these off-line quality measurements may only be available on an infrequent basis, such as every eight hours. However, operators in the manufacturing facility may want to have an estimate of product quality on a much more time sensitive basis. In that case, predictive models as described herein can bridge that gap. Trained from historical process settings and the corresponding quality results, predictive models can provide an estimate of product quality in real time. This estimate can be accessed by the operators in a standalone application, or the model can be deployed either on a local server or in a virtual private cloud, and the predictions can be written into a plant's digital control system (DCS). Alternatively, a model can even be deployed onto an edge device and locally consulted there, such as a piece of equipment out in the plant or field. If deployed into the DCS or at the edge device, from the operator's perspective, the model's predictions will look similar to hard measurements from physical sensors, which is why they are often referred to as soft sensors.

Beyond yielding accurate predictions, however, interpretability is very important in the context of soft sensors. For instance, when the model predicts a value that the operators did not expect, the operators may want to be able to investigate why the model thinks their quality is drifting. As pointed out before, embodiments offer a novel degree of options to interpret the predictions for a minimal loss in predictive performance.

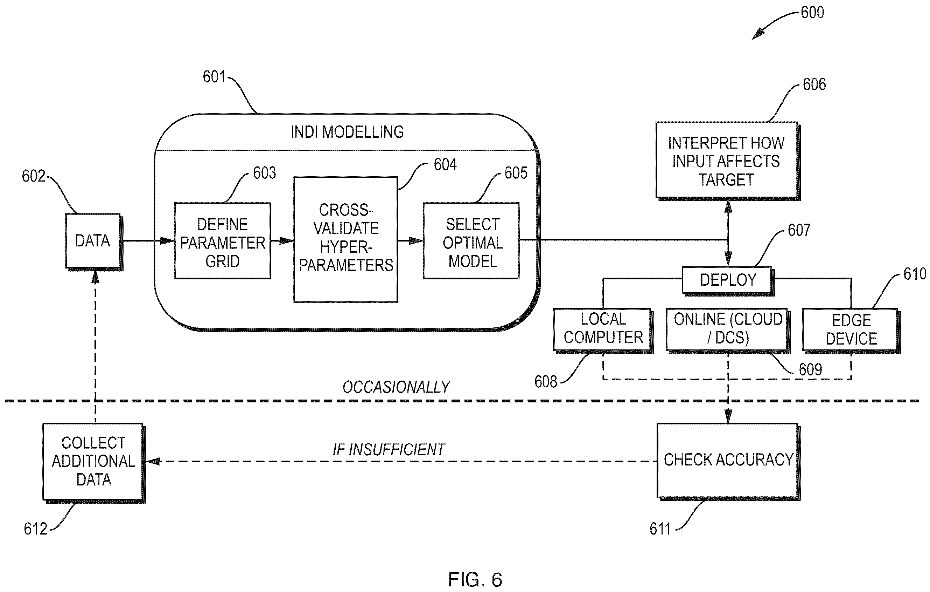

Integration of embodiments into a soft sensor is illustrated schematically in FIG. 6. Specifically, FIG. 6 is a workflow diagram illustrating a method 600 of how embodiments may be deployed as soft sensors. First, a set of input and output data is received 602 and, in turn, the received data is processed 601 using Indi learning functionality described herein, e.g., method 100. Specifically, the processing 601 includes defining 603 a parameter grid, cross-validating 604 hyper-parameters, and selecting 605 an optimal model. In an embodiment, defining 603 a parameter grid and cross-validating 604 hyper-parameters includes a user selecting a set of hyper-parameters for the tree (e.g., maximal tree depth, minimal number of samples per leaf) and one or more options for the local regression model. Depending on the type of regression models selected, additional hyperparameters may need to be cross-validated against when constructing the local regression models in the leaves (e.g., the number of latent variables in the case of a PLS model). According to an embodiment, selecting 605 an optimal model may include calculating results for each option and determining which option produces the highest $R^2$ value, or the lowest Mean Squared Error value. In turn, this selected model may be deployed.

As stated above, because the model is highly interpretable, i.e., the user can understand how the model subdivides and groups data and the model is differentiable, a user can interpret 606 how an input value may affect an output value. This interpretability and differentiability allows the model to be deployed 607 as a soft sensor in a number of environments, including a local computer 608, a cloud server 609, or an edge device 610 to name a few. Users should expect accurate results from the implemented soft sensor, however, users may decide to occasionally verify the accuracy 611 of the model as deployed. If a user finds the accuracy to be insufficient for the task at hand, the user may collect 612 additional data and this additional data may be fed back into the method 600 where the method 600 is repeated to update the model/generate a new model to achieve a higher degree of accuracy.

Integration Into an APC Loop

Another important application of predictive modeling to the process industries is advanced process control (APC). APC is often an essential component of real-world operations. An APC setup allows control of a certain measured target property based on one or more input entities. For instance, it may be the target to control the amount of outflow at the top of a distillation tower by automatically adjusting the amount of product feed at the bottom and the amount of steam that heats the tower up. However, when a change in the output is requested, this change is typically required to be implemented in a way that the target output is reached gradually as the result of a series of small consecutive changes. Making these small consecutive changes will avoid overshooting the target and/or creating temporary unstable operating conditions that can have undesirable effects, such as runaway reactions. To achieve such gradual change, APCs are usually implemented as control loops, where at each fixed time interval the resulting change in the target is evaluated versus its expected value based on the change in the controlled variables. These differences in inputs and outputs are commonly referred to as "gains."

Expected gain plays a crucial role, as it allows for comparison of the actual state of affairs with the desired state of affairs. In practice, expected gains are obtained as predictions from a certain model embedded into the APC control loop. Indi model embodiments offer a unique balance between predictive accuracy and interpretability. There is a crucial difference between APC control loops and soft sensors. In APC control loops, at each point in time there is a new setpoint for the desired outcome to be attained in the upcoming time interval. The way to attain this desired outcome is to calculate the corresponding adjustment needed in the controlled variables, which is typically done by numerical optimization. While gradient free optimization options exist, gradient based optimization is more efficient, which is an important aspect in real time systems like APC. Ergo, for deployment into APC loops, the option to calculate globally differentiable Indi regression models is a key differentiator. It is noted that in some settings gains are required to adhere to certain constraints, such as linear gain constraints or non-negativity constraints, that can be imposed to the local linear models.

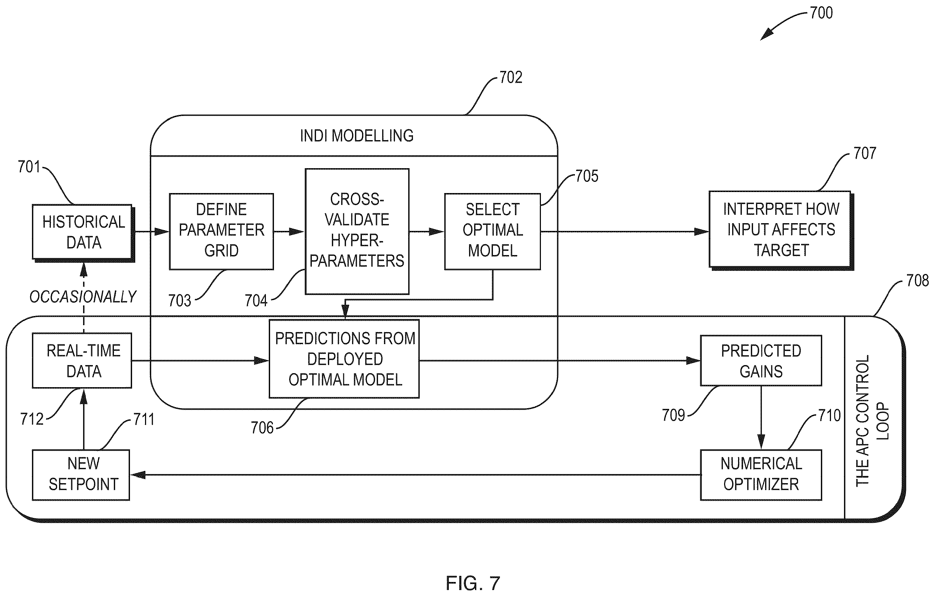

FIG. 7 is a schematic representation illustrating a method 700 of integrating a model, e.g., an Indi model embodiment as described herein, into an advanced process control loop. In the method 700, historical data of a real-world system is received and processed 702 using the model generation functionality described herein. Specifically, a parameter grid is defined 703, hyper-parameters are cross-validated 704, and an optimal model is selected 705. At step 707 a user can employ the model to interpret how an input value may affect an output value. To continue, once the optimal model is selected 705, the model can be entered into the APC control loop 708. Specifically, the selected model is deployed, and predictions based on the deployed optimal model are obtained 706. Predicted gains are obtained 709 from the predictions in the deployed 706 optimal model. Then, a numerical optimizer is implemented 710 to calculate the corresponding adjustment needed in the controlled variables to achieve the desired gain to a new setpoint. In turn, the controlled variables are adjusted accordingly and the control variable adjustment causes a response in the real-world system where the real-world system moves 711 to a new setpoint 711 and real time data of the real-world system is obtained 712. This real-time data may be stored and used as historical data to further refine the model, or the real-time data may be utilized 706 as predictions from the deployed model. The APC loop 708 may be repeated until a desired operating point is reached.

While the feedback loop functionality described in relation to FIG. 7 may be used in the process industry, such functionality may also be implemented in the aviation, robotics, autonomous driving, and medical device sectors. Further, the feedback loop functionality may also be used for the management of the electrical power grid, for instance in economic dispatch problems, or in the domain of distributed energy resources management (DERMS).

Surrogate Model in a Sumulation

Another real-world application for embodiments relates to the realm of engineering, specifically, utilizing models described herein as surrogate models for process simulation. Engineering simulations often rely on technically complex models that are based on sets of hundreds of thousands of equations, many of which can be differential equations. Such complex mathematical designs may yield accurate representations of reality, but can require vast amounts of computational resources to solve, even today.

Therefore, it can be prohibitive to use a high-fidelity simulation (i) directly in the context of scenario evaluation, or (ii) as a component in a higher-level architecture, such as an overarching simulation or a supply chain optimization tool. To overcome this drawback, surrogate models have been put forward. Surrogate models are machine learning models that are trained to predict the results from a set of simulation runs from the high-fidelity model as a function of the input parameters to those same high-fidelity simulations. As machine learning models predict in real time, the surrogate model can then be used to approximate the predictions that would have been obtained from the high-fidelity model. The models described herein, i.e., Indi models, can be used as surrogate models. These surrogate models may be embedded as a more efficient component into more complex architectures. Also here, Indi model embodiments offer a unique combination of being interpretable and having the option to be globally differentiable, while achieving a high predictive accuracy. In this context too, the option to have globally differentiable models is attractive, since the most efficient solvers deployed in both process simulation and supply chain optimization are gradient based.

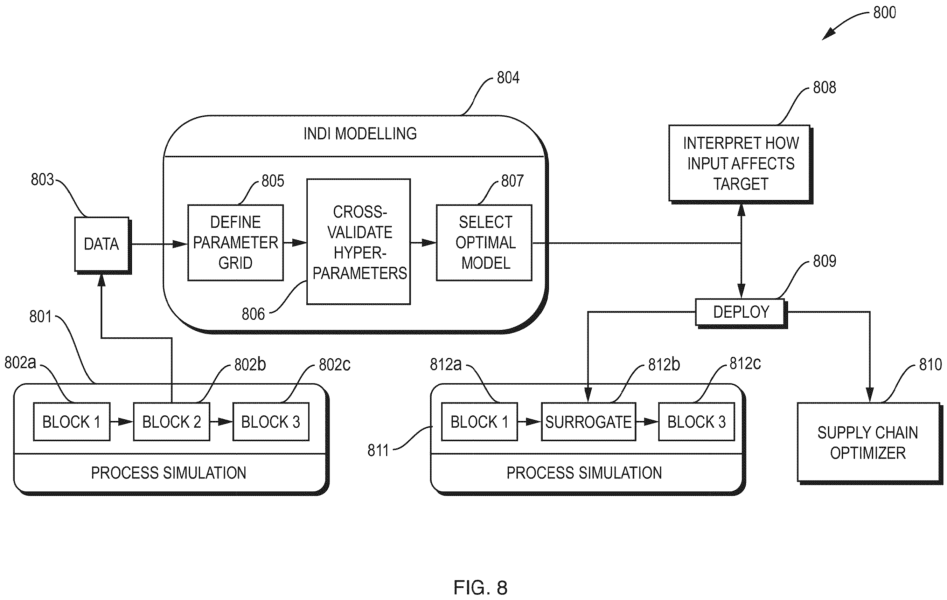

FIG. 8 is a flow diagram illustrating a method 800 for embedding Indi learning embodiments into simulation or supply chain optimization. In the method 800, first, a high-fidelity simulation is performed 801. Performing the high-fidelity simulation 801 includes using input data 802a in complex engineering/mathematical processing 802b, to determine output data 802c. This set of input and output data is stored 803 and, in turn, processed 804 using the Indi learning functionality described herein. Specifically, a parameter grid is defined 805, hyper-parameters are cross validated 806, and an optimal model is selected 807. This selected 807 model is then used in the method 800 as a surrogate model. Further, a user can interpret 808 the model to understand how an input value may affect an output value. The selected model is used as a surrogate model which can include deploying 809 the model as a supply chain optimizer 810, or the model can be deployed as a surrogate model in a process simulation 811. If the model is deployed as a process simulation 811, input data 812a is processed by the surrogate model 812b to determine predicted output data 812c.

Application to Wood Pulp Processing - Example

To illustrate another example application of embodiments, take for example the Kraft process. The Kraft process is a chemical manufacturing process that converts wood into wood pulp. The latter is composed almost purely of cellulose fibers, which is also the main ingredient to manufacture paper. The Kraft process consists of treatment of wood chips with a hot mixture of water, sodium hydroxide, and sodium sulfide, known as "white liquor," which decomposes the lignin, hemicellulose, and cellulose in the wood. The technology encompasses several process steps, both mechanical and chemical. However, details on the manufacturing process will not be elaborated herein as the intent of the example relates to the results of the manufacturing process. Further details of the manufacturing process can be found in ("Method and System Optimizing Resource Allocation in Paper and Pulp Processing," patent application by You et al., Attorney Docket Number 1086.2102-000) and references therein.

An important entity to monitor in the Kraft process is the so-called total alkaline load. To measure this entity, samples need to be drawn and a model that can act as a soft sensor for the total alkaline charge is helpful to streamline manufacturing operations. Yet there are typically over forty process sensors deemed relevant to alkaline load, and it is known that linear models do not meet an acceptable predictive accuracy. Attempts have been made to use complex nonlinear models, such as XGBoost, which can attain acceptable predictive accuracy. When measured by the well-known coefficient of determination ($R^2$), XGBoost models can achieve a score of $R^2 = 0.95$, with a score of 1 representing a perfect fit. However, XGBoost models are poorly interpretable and not continuously differentiable.

As posited herein, embodiments have the potential to achieve an accuracy similar to complexly nonlinear models such as XGBoost, while both being interpretable and having the option to be either locally or globally continuously differentiable. Table 2 below summarizes the results achieved by existing methods and embodiments (Indi) on a data set consisting of 39583 measurements of 45 sensors from the Kraft manufacturing process, calibrated against the corresponding alkaline loads. To train the models, data was randomly split into a training and a test set, the latter comprising 20% of the data. Results are shown for predictions on the independent test set.

Table 2: Model accuracy and properties for a set of models applied to the Kraft process data set

| Method | Parameters | Coefficient Interpretability | LV Interpretability | Differentiable | $R^2$ (Test Set) |
|---|---|---|---|---|---|
| SNIPLS | $\eta = 0$, $h = 21$ | Yes | Yes | Globally | 0.70 |
| XGBoost | | No | No | Not | 0.95 |
| Random Forrest | | No | No | Not | 0.96 |
| Indi | Ridge, tree | Yes | No | Locally | 0.96 |
| Indi | SNIPLS, tree | Yes | Yes | Locally | 0.96 |
| Indi | Ridge, Local weight | Yes | No | Globally | 0.81 |
| Indi | SNIPLS, Local weight | Yes | Yes | Globally | 0.81 |

Table 2 above shows that as long as it suffices to have a locally differentiable model, accuracy of Indi models can be *pari passu* with ensemble models. When global differentiability is a prerequisite, embodiments compromise about fifteen percent in model accuracy for the advantage of improved access to gradients.

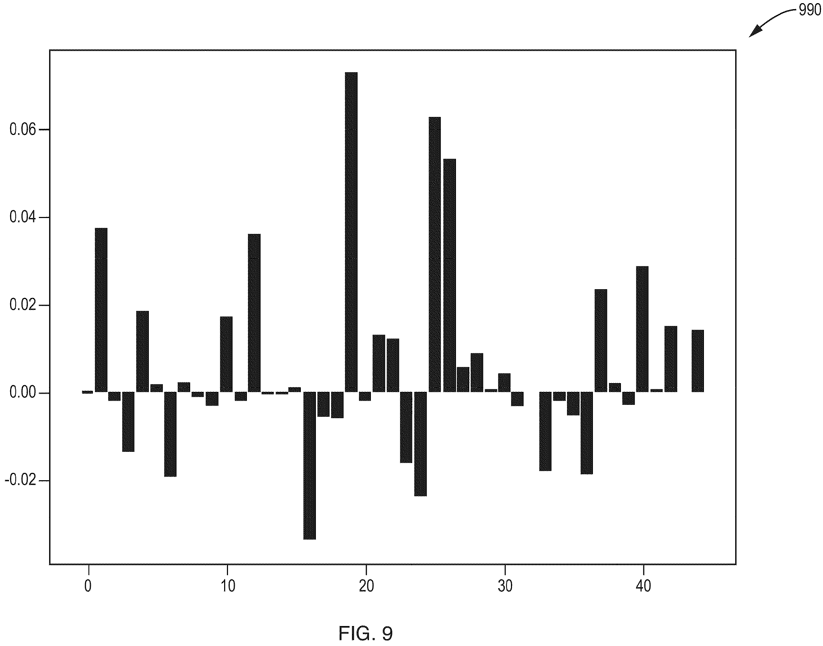

In terms of interpretation, the local models inherit all aspects of a classical regression model. For instance, in the case of the last option listed in Table 2, where the local models are SNIPLS models, the local regression coefficients (shown in FIG. 9 in the plot 990 of local regression coefficients from the local SNIPLS regression model that governs the first leaf in the Indi regression model) show how each variable ends up influencing the predictand.

However, since this is a latent variable based regression model, it is also possible to investigate the score space, and identify the position therein for each data point. This holds true for both training data and new incoming data points in an online soft sensor deployment. Inspection of the score space enables discerning even more granular structure than the one carved up by the tree in the Indi model.

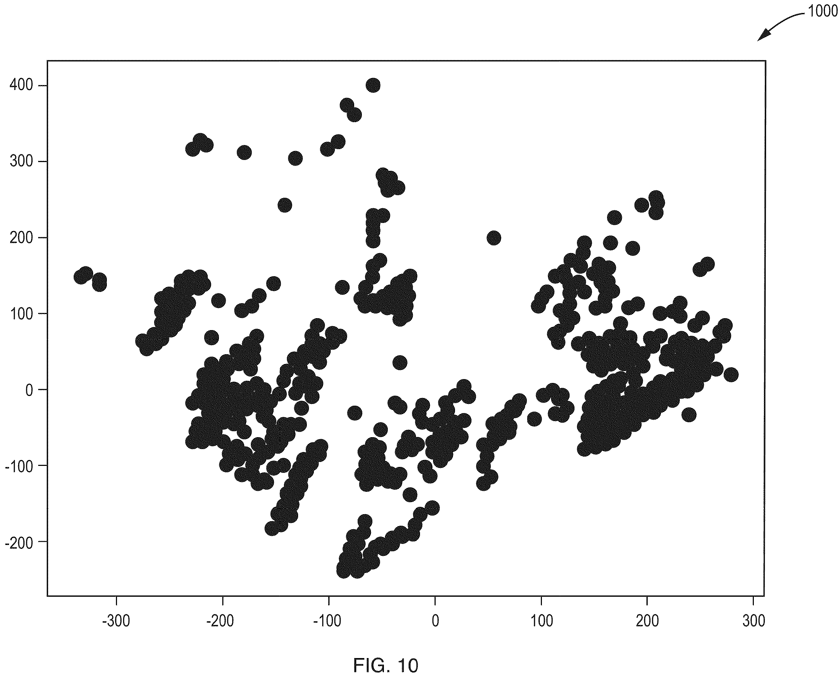

The scatter plot 1000 of the first two local latent variables from the local SNIPLS regression model that governs the first leaf in the Indi regression model in FIG. 10 shows that there is indeed some deeper structure that can be discerned when plotting the dominant two latent variables of the SNIPLS model in the first leaf. Which variables separate these substructures, can then be investigated by inspecting the corresponding loadings.

It is noted that the final Indi regression model listed in Table 2 corresponds to a depth three Indi model, which implies that there are only eight local models that model the entire data set that consists of almost 40000 data points. The Indi model embodiments disclosed herein offer a unique tradeoff between predictive performance, interpretability and the capacity to provide global gradients.

Example Advantages

Industrial machine learning models need to fulfil a set of requirements less common in the broader field of machine learning. At first, industrial machine learning models are often deployed into optimization routines, such as supply chain optimizers, or process simulations, which require the models' gradients to be accessible and hence, require the models to be continuously differentiable. Secondly, being able to interpret models is more often a necessity than an add-on, both to be able to investigate why models make certain predictions and to enhance operator confidence in the models. Finally, predictions from industrial models are often expected to adhere to certain constraints, such as constraints imposed by natural conservation laws. While solutions exist to deliver on each of these challenges individually, embodiments deliver on all three requirements simultaneously, without compromising accuracy.

Existing methods force users to emphasize one of the three common industrial requirements, while possibly also settling for a less accurate model. For instance, if regression coefficient interpretability is required, the user would not be able to apply some of the most accurate models, such as neural networks or XGBoost, but rather the user would have to resort to versions of linear models that can be interpreted. Embodiments allow the user to deploy models that satisfy the industrial requirements of interpretability, differentiability and adherence to constraints without compromising predictive accuracy, which is a major advance.

Computer Support

FIG. 11 illustrates a computer network or similar digital processing environment in which embodiments of the present disclosure may be implemented.

Client computer(s)/devices 50 and server computer(s) 60 provide processing, storage, and input/output devices executing application programs and the like. The client computer(s)/devices 50 can also be linked through communications network 70 to other computing devices, including other client devices/processes 50 and server computer(s) 60. The communications network 70 can be part of a remote access network, a global network (e.g., the Internet), a worldwide collection of computers, local area or wide area networks, and gateways that currently use respective protocols (TCP/IP, Bluetooth®, etc.) to communicate with one another. Other electronic device/computer network architectures are suitable.

FIG. 12 is a diagram of an example internal structure of a computer (e.g., client processor/device 50 or server computers 60) in the computer system of FIG. 11. Each computer 50, 60 contains a system bus 79, where a bus is a set of hardware lines used for data transfer among the components of a computer or processing system. The system bus 79 is essentially a shared conduit that connects different elements of a computer system (e.g., processor, disk storage, memory, input/output ports, network ports, etc.) that enables the transfer of information between the elements. Attached to the system bus 79 is an I/O device interface 82 for connecting various input and output devices (e.g., keyboard, mouse, displays, printers, speakers, etc.) to the computer 50, 60. A network interface 86 allows the computer to connect to various other devices attached to a network (e.g., network 70 of FIG. 11). Memory 90 provides volatile storage for computer software instructions 92A and data 94a used to implement an embodiment of the present disclosure. The computer software instructions can implement the methods and operations of the methods described herein, e.g., the methods 100, 300, 400, 500, 600, 700, and/or 800 detailed above. Disk storage 95 provides non-volatile storage for computer software instructions 92B and data 94b used to implement an embodiment of the present disclosure. The computer software instructions can implement the methods and operations of methods detailed herein. A central processor unit 84 is also attached to the system bus 79 and provides for the execution of computer instructions.

In one embodiment, the processor routines 92A-B and data 94a-b are a computer program product (generally referenced 92), including a non-transitory computer-readable medium (e.g., a removable storage medium such as one or more DVD-ROM's, CD-ROM's, diskettes, tapes, etc.) that provides at least a portion of the software instructions for an embodiment. The computer program product 92 can be installed by any suitable software installation procedure, as is well known in the art. In another embodiment, at least a portion of the software instructions may also be downloaded over a cable communication and/or wireless connection. In other embodiments, the invention programs are a computer program propagated signal product embodied on a propagated signal on a propagation medium (e.g., a radio wave, an infrared wave, a laser wave, a sound wave, or an electrical wave propagated over a global network such as the Internet, or other network(s)). Such carrier medium or signals may be employed to provide at least a portion of the software instructions for the present invention routines/program 92A-B.

Embodiments or aspects thereof may be implemented in the form of hardware, firmware, or software. If implemented in software, the software may be stored on any non-transient computer readable medium that is configured to enable a processor to load the software or subsets of instructions thereof. The processor then executes the instructions and is configured to operate or cause an apparatus to operate in a manner as described herein.

Further, firmware, software, routines, or instructions may be described herein as performing certain actions and/or functions of the data processors. However, it should be appreciated that such descriptions contained herein are merely for convenience and that such actions in fact result from computing devices, processors, controllers, or other devices executing the firmware, software, routines, instructions, etc.

It should be understood that the flow diagrams, block diagrams, and network diagrams may include more or fewer elements, be arranged differently, or be represented differently. But it further should be understood that certain implementations may dictate the block and network diagrams and the number of block and network diagrams illustrating the execution of the embodiments be implemented in a particular way.

Accordingly, further embodiments may also be implemented in a variety of computer architectures, physical, virtual, cloud computers, and/or some combination thereof, and thus, the data processors described herein are intended for purposes of illustration only and not as a limitation of the embodiments.

While example embodiments have been particularly shown and described, it will be understood by those skilled in the art that various changes in form and details may be made therein without departing from the scope of the embodiments encompassed by the appended claims.

The teachings of all patents, published applications and references cited herein are incorporated by reference in their entirety.

<u>References</u>

Alfons, A., Croux, C., and Gelper, S. (2013). Sparse least trimmed squares regression for analyzing high-dimensional large data sets. The Annals of Applied Statistics, pages 226-248.

Bertsimas, D. and Dunn, J. (2017). Optimal classification trees. Machine Learning, 106:1039-1082.

Bertsimas, D., Dunn, J., and Wang, Y. (2021). Near-optimal nonlinear regression trees. Operations Research Letters, 49(2):201-206.

Breiman, L. (2001). Random forests. Machine learning, 45:5-32.

Chun, H. and Keleş, S. (2010). Sparse partial least squares regression for simultaneous dimension reduction and variable selection. Journal of the Royal Statistical Society Series B: Statistical Methodology, 72(1):3-25.

Cleveland, W. S. and Devlin, S. J. (1988). Locally weighted regression: an approach to regression analysis by local fitting. Journal of the American statistical association, 83(403):596-610.

Dunn, J. (2018). Optimal trees for prediction and prescription. PhD Thesis, Massachusetts Institute of Technology, Operations Research Center.

Friedberg, R., Tibshirani, J., Athey, S., and Wager, S. (2020). Local linear forests. Journal of Computational and Graphical Statistics, 30(2):503-517.

Friedman, J. H. (2001). Greedy function approximation: a gradient boosting machine. Annals of statistics, pages 1189-1232.

Gras Andreu, V., Serneels, S., and Varvarezos, D. (2022). Projection methods to impose equality constraints on algebraic models. US Patent 11,474,508.

Hoerl, A. E. and Kennard, R. W. (1970). Ridge regression: Biased estimation for nonorthogonal problems. Technometrics, 12(1):55-67.

Hoffmann, I., Filzmoser, P., Serneels, S., and Varmuza, K. (2016). Sparse and robust pls for binary classification. Journal of Chemometrics, 30(4):153-162.

Hoffmann, I., Serneels, S., Filzmoser, P., and Croux, C. (2015). Sparse partial robust m regression. Chemometrics and Intelligent Laboratory Systems, 149:50-59.

Holland, P. (1973). Weighted ridge regression: Combining ridge and robust regression methods. In National Bureau of Economic Research Working Paper #11. National Bureau of Economic Research.

Hu, X., Rudin, C., and Seltzer, M. (2019). Optimal sparse decision trees. Advances in Neural Information Processing Systems, 32.

Hyafil, L. and Rivest, R. L. (1976). Constructing optimal binary decision trees is np-complete. Information processing letters, 5(1):15-17.

Keenan, M. R. and Zheng, Q. Q. (2023). Apparatus and methods to build a reliable deep learning controller by imposing model constraints. US Patent 11,740,598.

Kurnaz, F. S., Homann, I., and Filzmoser, P. (2018). Robust and sparse estimation methods for high-dimensional linear and logistic regression. Chemometrics and Intelligent Laboratory Systems, 172:211-222.

Serneels, S., Croux, C., Filzmoser, P., and Van Espen, P. J. (2005). Partial robust m-regression. Chemometrics and Intelligent Laboratory Systems, 79(1-2):55-64.

Tibshirani, R. (1996). Regression shrinkage and selection via the lasso. Journal of the Royal Statistical Society Series B: Statistical Methodology, 58(1):267-288.

Wickramarachchi, D., Robertson, B., Reale, M., Price, C., and Brown, J. (2016). Hhcart: An oblique decision tree. Computational Statistics & Data Analysis, 96:12-23.

Wold, H. (1966). Nonlinear estimation by iterative least squares procedures. In David, F., editor, Papers in Statistics: Festschrift for J. Neyman, pages 411-444. Wiley.

You, J., Feng, S., Zhao, H., Blancett, J., and Claussen, H. (2024). "Method and System Optimizing Resource Allocation in Paper and Pulp Processing," Attorney Docket Number 1086.2102-000.

Zhang, R., Xin, R., Seltzer, M., and Rudin, C. (2023). Optimal sparse regression trees. In Proceedings of the AAAI Conference on Artificial Intelligence, volume 37, pages 11270-11279.

Zou, H. and Hastie, T. (2005). Regularization and variable selection via the elastic net. Journal of the Royal Statistical Society Series B: Statistical Methodology, 67(2):301-320.

**Claims**

1. A computer-implemented method of creating a model configured to predict behavior of a real-world system, the method comprising, by a processor:

   receiving, in memory, input and output data for the real-world system;
   subdividing the input and output data received into a plurality of subsets in accordance with a criterion;
   for each subset of the plurality, fitting a regression model to data of the subset;
   for each data point in each subset of the plurality of subsets, assigning a respective weight to the data point for each regression model; and
   generating the model configured to predict the behavior of the real-world system by calculating a weighted average of each regression model using the assigned respective weights.

2. The method of Claim 1, wherein the subdividing the input and output data into a plurality of subsets comprises: iteratively subdividing the input and output data to form a tree, wherein each subset of the plurality of subsets is a leaf of the tree.

3. The method of Claim 2, further comprising:

   evaluating compliance of the plurality of subsets with a quality metric; and
   responsive to the evaluating determining at least one subset does not comply with the quality metric, creating at least one new subset by combining two or more subsets of the plurality of subsets.

4. The method of Claim 3, wherein the fitting, the assigning, and the generating are performed with the created at least one new subset and data of the at least one new subset.

5. The method of any one of Claims 1 to 4, wherein the criterion is a mean-squared error.

6. The method of any one of Claims 1 to 5, wherein each weight is assigned based on a weighting scheme inherited from loess regression.

7. The method of any one of Claims 1 to 6, wherein a given regression model is a cross-validated linear regression model.

8. The method of any one of Claims 1 to 7, further comprising:

   receiving an indication of one or more constraints; and
   modifying the generated model to predict the behavior of the real-world system in accordance with the one or more constraints received.

9. The method of any one of Claims 1 to 8, further comprising:

   receiving an indication of a hyper-parameter; and
   wherein, in generating the model, the model is generated in accordance with the hyper-parameter.

10. The method of any one of Claims 1 to 9, further comprising:
    deploying the model to control operation of the real-world system; and optionally, wherein deploying the model to control operation of the real-world system comprises:

    receiving, in the memory, an indication of a parameter of the real-world system;
    predicting real-time behavior of the real-world system by processing the received indication of the parameter using the model; and
    controlling operation of the real-world system based on the predicted real-time behavior.

11. The method of any one of Claims 1 to 10, further comprising:
    integrating the model in a control loop, wherein the control loop (i) processes candidate operating characteristics of the real-world system using the model to determine predicted behavior change in the real-world system and (ii) responsively sets one or more operating characteristics in the real-world system based on the predicted behavior change.

12. The method of any one of Claims 1 to 11, further comprising:
    deploying the model as a surrogate model to determine optimized operations of the real-world system; and optionally, wherein deploying the model as a surrogate model to determine optimized operations of the real-world system comprises:
    iteratively testing candidate operations of the real-world system using the surrogate model until a behavior predicted by the model for given candidate operations meets one or more criteria.

13. The method of any one of Claims 1 to 12, further comprising:
    deploying the model as a block in a process simulation.

14. The method of any one of Claims 1 to 13, wherein the real-world system comprises at least one of a manufacturing system, a chemical system, a modeling system, an engineering system, a logistical system, a power system, or any combination thereof.

15. The method of any one of Claims 1 to 14, further comprising:

receiving, in the memory, an indication of a parameter of the real-world system; and
processing the received indication of the parameter of the real-world system using the model to estimate a property of the real-world system; and

optionally, wherein the estimated property is at least one of: quality of a product produced by the real-world system; composition of effluent produced by the real-world system; composition of by-product produced by the real-world system; yield of a product produced by the real-world system; yield of a by-product produced by the real-world system; operational health of the real-world system; and energy consumption of the real-world system.

16. A computer-program for creating a model configured to predict behavior of a real-world system, the computer-program comprising instructions which, when the program is executed by a computer, cause the computer to carry out the method of any one of Claims 1 to 15.

17. A computer-based system for creating a model configured to predict behavior of a real-world system, the system comprising:
a processor; and
a memory having recorded thereon the computer-program of Claim 16.

18. A non-transitory computer program product for creating a model configured to predict behavior of a real-world system, the computer program product comprising a computer-readable medium, the computer readable medium having recorded thereon the computer-program of Claim 16.

~100

| Receive, in memory, input and output data for a real-world system | ~101 |

↓

| Subdivide the input and output data received into a plurality of subsets in accordance with a criterion | ~102 |

↓

| For each subset of the plurality, fit a regression model to data of the subset | ~103 |

↓

| For each data point in each subset of the plurality of subsets, assign a respective weight to the data point for each regression model | ~104 |

↓

| Generate the model configured to predict behavior of the real-world system by calculating a weighted average of each regression model using the assigned respective weights | ~105 |

FIG. 1

EXAMPLE INPUT/OUTPUT DATA GROUPINGS

FIG. 2

FIG. 3

FIG. 4

500

501 DATA

502 MSECV HHCART ALGORITHM

503 DECISION TREE WITH LOCAL MODELS AS LEAVES*

$x_1 + 3x_2 = a$
$x_1 + 3x_2 \leq a$
$x_1 + 3x_2 > a$
$x_1 = b$
$x_1 \leq b$
$x_1 > b$
$x_1 + 3x_2$
$x_1 = c$
$x_3 \leq c$
$x_3 > c$

LOCAL MODEL 1
LOCAL MODEL 2
LOCAL MODEL 3
LOCAL MODEL 4

504 LOCAL WEIGHTING

505 PREDICTIVE MODEL AT EACH POINT†

| $x_1 + 3x_2 - x_4 = a$ |
| $x_2 + 3x_3 - x_1 = b$ |
| $5x_1 + 3x_4 = c$ |
| $x_1 - 8x_2 - x_4 = d$ |
| $x_2 + 5x_3 + x_4 = e$ |

506 INTERPRETATION

507 PREDICTED RESPONSE‡

| 1.57 |
| -3.13 |
| 11.22 |
| -0.67 |
| 3.25 |

508 IDENTIFY OPTIMAL SETTINGS

509 ONLINE/ OFFLINE/ EDGE DEPLOYMENT

FIG. 5

FIG. 6

FIG. 7

FIG. 8

EP 4 672 094 A1

FIG. 9

EP 4 672 094 A1

FIG. 10

EP 4 672 094 A1

EP 4 672 094 A1

NETWORK
70

FIG. 11

29

FIG. 12

EP 4 672 094 A1

Europäisches
Patentamt
European
Patent Office
Office européen
des brevets

# EUROPEAN SEARCH REPORT

**Application Number**

EP 25 18 5800

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BLANQUERO RAFAEL ET AL: "On sparse optimal regression trees", EUROPEAN JOURNAL OF OPERATIONAL RESEARCH, ELSEVIER, AMSTERDAM, NL, vol. 299, no. 3, 18 December 2021 (2021-12-18), pages 1045-1054, XP086959619, ISSN: 0377-2217, DOI: 10.1016/J.EJOR.2021.12.022 [retrieved on 2021-12-18] * abstract; figures 1,2; tables 1,3 * * 1. Introduction * * 2. Sparse optimal randomized regression trees * * 4. Computational experiments * ----- | 1-18 | INV. G06N5/01 G06N5/045 |
| | | | TECHNICAL FIELDS SEARCHED (IPC) |
| | | | G06N |

The present search report has been drawn up for all claims

| Place of search | Date of completion of the search | Examiner |
|---|---|---|
| The Hague | 30 October 2025 | De Meyer, Arnaud |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

& : member of the same patent family, corresponding
　　document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11474508 B, Gras Andreu, V., Serneels, S., and Varvarezos, D.

- US 11740598 B, Keenan, M. R. and Zheng, Q. Q.

**Non-patent literature cited in the description**

- **ALFONS, A.** ; **CROUX, C.** ; **GELPER, S.** Sparse least trimmed squares regression for analyzing high-dimensional large data sets. *The Annals of Applied Statistics*, 2013, 226-248
- **BERTSIMAS, D.** ; **DUNN, J.** Optimal classification trees. *Machine Learning*, 2017, vol. 106, 1039-1082
- **BERTSIMAS, D.** ; **DUNN, J.** ; **WANG, Y.** Near-optimal nonlinear regression trees. *Operations Research Letters*, 2021, vol. 49 (2), 201-206
- **BREIMAN, L.** Random forests. *Machine learning*, 2001, vol. 45, 5-32
- **CLEVELAND, W. S.** ; **DEVLIN, S. J.** Locally weighted regression: an approach to regression analysis by local fitting. *Journal of the American statistical association*, 1988, vol. 83 (403), 596-610
- **DUNN, J.** Optimal trees for prediction and prescription. Operations Research Center, 2018
- **FRIEDBERG, R.** ; **TIBSHIRANI, J.** ; **ATHEY, S.** ; **WAGER, S.** Local linear forests. *Journal of Computational and Graphical Statistics*, 2020, vol. 30 (2), 503-517
- **FRIEDMAN, J. H.** Greedy function approximation: a gradient boosting machine. *Annals of statistics*, 2001, 1189-1232
- **HOERL, A. E.** ; **KENNARD, R. W.** Ridge regression: Biased estimation for nonorthogonal problems. *Technometrics*, 1970, vol. 12 (1), 55-67
- **HOFFMANN, I.** ; **FILZMOSER, P.** ; **SERNEELS, S.** ; **VARMUZA, K.** Sparse and robust pls for binary classification. *Journal of Chemometrics*, 2016, vol. 30 (4), 153-162
- **HOFFMANN, I.** ; **SERNEELS, S.** ; **FILZMOSER, P.** ; **CROUX, C.** Sparse partial robust m regression. *Chemometrics and Intelligent Laboratory Systems*, 2015, vol. 149, 50-59
- Weighted ridge regression: Combining ridge and robust regression methods. **HOLLAND, P.** National Bureau of Economic Research Working Paper #11. National Bureau of Economic Research, 1973

- **HU, X.** ; **RUDIN, C.** ; **SELTZER, M.** Optimal sparse decision trees. *Advances in Neural Information Processing Systems*, 2019, vol. 32
- **HYAFIL, L.** ; **RIVEST, R. L.** Constructing optimal binary decision trees is np-complete. *Information processing letters*, 1976, vol. 5 (1), 15-17
- **KURNAZ, F. S.** ; **HOMANN, I.** ; **FILZMOSER, P.** Robust and sparse estimation methods for high-dimensional linear and logistic regression. *Chemometrics and Intelligent Laboratory Systems*, 2018, vol. 172, 211-222
- **SERNEELS, S.** ; **CROUX, C.** ; **FILZMOSER, P.** ; **VAN ESPEN, P. J.** Partial robust m-regression. *Chemometrics and Intelligent Laboratory Systems*, 2005, vol. 79 (1-2), 55-64
- **TIBSHIRANI, R.** Regression shrinkage and selection via the lasso. *Journal of the Royal Statistical Society Series B: Statistical Methodology*, 1996, vol. 58 (1), 267-288
- **WICKRAMARACHCHI, D.** ; **ROBERTSON, B.** ; **REALE, M.** ; **PRICE, C.** ; **BROWN, J.** Hhcart: An oblique decision tree. *Computational Statistics & Data Analysis*, 2016, vol. 96, 12-23
- Nonlinear estimation by iterative least squares procedures. **WOLD, H.** Papers in Statistics: Festschrift for J. Neyman. Wiley, 1966, 411-444
- **YOU, J.** ; **FENG, S.** ; **ZHAO, H.** ; **BLANCETT, J.** ; **CLAUSSEN, H.** Method and System Optimizing Resource Allocation in Paper and Pulp Processing. *Attorney Docket Number 1086.2102-000*, 2024
- **ZHANG, R.** ; **XIN, R.** ; **SELTZER, M.** ; **RUDIN, C.** Optimal sparse regression trees. *Proceedings of the AAAI Conference on Artificial Intelligence*, 2023, vol. 37, 11270-11279
- **ZOU, H.** ; **HASTIE, T.** Regularization and variable selection via the elastic net. *Journal of the Royal Statistical Society Series B: Statistical Methodology*, 2005, vol. 67 (2), 301-320